# EUROPÄISCHE PATENTSCHRIFT

(11) **EP 2 123 697 B1**
(45) Veröffentlichungstag und Bekanntmachung des Hinweises auf die Patenterteilung: **21.03.2012**
(21) Anmeldenummer: 09159475.4
(22) Anmeldetag: 06.05.2009
(51) Int. Cl.: C08G 77/26, C08G 77/388

(54) **Verfahren zur Herstellung von quartäre Ammoniumgruppen aufweisenden Organopolysiloxanen**
Process for preparing organopolysiloxanes having quaternary ammonium groups
Procédé de préparation de polysiloxanes organiques portant des groupes ammonium quaternaires

(30) Priorität: 19.05.2008 DE 102008001867
(43) Veröffentlichungstag der Anmeldung: 25.11.2009
(73) Patentinhaber: Wacker Chemie AG, 81737 München (DE)
(72) Erfinder: Herzig, Christian, 83329 Waging (DE)
(74) Vertreter: Deffner-Lehner, Maria

(56) Entgegenhaltungen:
- DE-A1- 3 236 466
- US-B1- 6 384 254

## Beschreibung

Die Erfindung betrifft ein Verfahren zur Herstellung von quartäre Ammoniumgruppen aufweisenden Organopolysiloxanen.

Verbindungen mit quartären Stickstoffatomen, oft kurz Quats genannt, sind bekannt.

DE 32 36 466 A1 (korrespondierende US 4,417,066) beschreibt ein Verfahren zur Herstellung von Siloxanen, die quartäre Ammoniumhalogenidgruppen enthalten, durch Reaktion von Siloxanolen mit Silanen, die quartäre Ammoniumhalogenidgruppen und mindestens zwei kondensationsfähige Alkoxygruppen enthalten. Die quartären Ammoniumgruppen der Silane sind am Siliciumatom über divalente Kohlenwasserstoffbrücken gebunden, die auch Sauerstoffatome in Form von Ether- oder Hydroxygruppen enthalten können. Die zuvor separat hergestellten salzartigen quatfunktionellen Silane weisen eine schlechte Löslichkeit in Siloxanen auf, es sind vergleichsweise drastische Reaktionsbedingungen von ca. 150°C über mehrere Stunden notwendig, und außerdem müssen entstandene flüchtige Nebenprodukte des Herstellprozesses am Ende entfernt werden.

Ein ähnliches Verfahren ist aus US 5,602,224 bekannt, in dem ein Siloxanol mit einem quatfunktionellen Trialkoxysilan unter Zuhilfenahme eines Amins umgesetzt wird. Der quartäre Stickstoff kann Polyethersubstituenten enthalten.

Eine Kondensationsmethode von Siloxanolen mit (m)ethoxyhaltigen Organosilanen ist in US 6,525,130 beschrieben. Sie beinhaltet die Verwendung eines basischen Katalysators und eines Emulgatorpakets und praktisch beliebig funktionalisierte Organosilane, die 2 oder 3 (M)ethoxygruppen enthalten. Tertiäre oder quartäre Aminosilane sind nicht offenbart.

EP 1 063 344 A2 (korrespondierende US 6,515,095) beschreibt Formulierungen zur Faser- und Textilbehandlung, die Silicone enthalten, die ihrerseits mindestens ein Strukturelement enthalten, das aus einem stickstoffhaltigen Silanbaustein besteht, der außerdem mit 2 Diorganosiloxansubstituenten und einer Alkoxygruppe substituiert ist. Die Formulierung enthält mindestens einen Emulgatortyp. Der stickstoffhaltige Silanbaustein ist nicht als quartäres Amin beschrieben. Dieser Aminbaustein kann auch kein Kettenende bilden. Um endständige Aminogruppen zu erhalten ist ein weiterer Umsetzungsschritt mit einem stickstoffhaltigen Dialkoxysilan erforderlich. Ein Verfahren zu Herstellung von endständigen Quatsiloxanen ist nicht beschrieben.

In DE 196 52 524 A1 und WO 2004/044306 A1 sind jeweils Methoden zur Herstellung quatfunktioneller Siloxane beschrieben.

In DE 196 52 524 A1 wird die Herstellung von Emulsionen quatfunktioneller Siloxane beschrieben. Die Quaternierung wird durch wiederholte Alkylierung üblicher Aminosiloxane mit prim./sec. Aminogruppen durch Methyltosylat erreicht wird. Für die Multialkylierung sind große Mengen an Alkylierungsmittel notwendig und die frei werdende Sulfonsäure muss mit großen Mengen Natriumhydrogencarbonat und in Gegenwart von Wasser (in Mengen von 20 - 95,99 Gew.-% Wasser, bevorzugt 60 - 90 Gew.-% Wasser, jeweils bezogen auf das Gesamtgewicht der Emulsion) neutralisiert werden, wobei Emulsionen mit großer Salzbelastung erhalten werden. Durch das Verfahren in Wasser muss bei Raumtemperatur gearbeitet werden, um die Emulsionen nicht zu zerstören, was zu langen Reaktionszeiten und damit zu langen Anlagenbelegungen und unwirtschaftlichen Raum-/Zeitausbeuten führt.

Gemäß WO 2004/044306 A1 werden endständig quatfunktionelle Siloxane in einer 2-stufigen Synthesesequenz aus den Epoxyvorstufen erhalten: Erst werden diese mit einem sec./tert.

Diamin umgesetzt und danach mit Methyltosylat alkyliert. Beides sind keine Kondensationsverfahren.

Bekannt ist aus US 6,384,254 B1 ein Verfahren zur Herstellung von quartäre Ammoniumhalogenidgruppen enthaltenden Siloxanen durch Reaktion von Siloxanolen mit Alkoxysilanen, die quartäre Ammoniumhalogenidgruppen enthalten, wodurch das Gegenion immer ein Chlorid ist. Es werden Polysiloxane beschrieben, die endständige Siloxaneinheiten enthalten, die sowohl eine quartäre Ammoniumgruppe als auch mindestens eine Alkoxygruppe aufweisen.

Es bestand die Aufgabe ein Verfahren zur Herstellung von quartäre Ammoniumgruppen aufweisenden Organopolysiloxanen bereitzustellen, bei dem die oben beschriebenen Nachteile vermieden werden, das schnell und wirtschaftlich ist, bei dem quartäre Ammoniumgruppen aufweisenden Organopolysiloxanen mit einer geringeren Salzbelastung und in Substanz erhalten werden, und bei dem der Wirkstoff also in einer höheren Konzentration erhalten wird.

Weiterhin bestand die Aufgabe quartäre Ammoniumgruppen aufweisende Organopolysiloxane bereitzustellen, die Siloxaneinheiten, die sowohl quartäre Ammoniumgruppen als auch reaktionsfähige Gruppen, wie Alkoxy- oder Hydroxygruppen enthalten, aufweisen.

Die Aufgabe wird durch die Erfindung gelöst.

Gegenstand der Erfindung ist ein Verfahren zur Herstellung von quartäre Ammoniumgruppen aufweisenden Organopolysiloxanen indem in einem ersten Schritt

Organopolysiloxane (1), die mindestens eine endständige Einheit der allgemeinen Formel

HO-SiR₂O_{1/2} (I)

aufweisen,
mit Aminosilanen (2) der allgemeinen Formel

AₐR_{b}Si(OR¹)_{4-(a+b)} (II),

wobei
- A: einen einwertigen SiC-gebundenen organischen Rest, der mindestens eine tertiäre Aminogruppe enthält, bedeutet, mit der Maßgabe, dass der Rest A keine primären und sekundären Aminogruppen enthält,
- R: gleich oder verschieden sein kann und einen einwertigen Kohlenwasserstoffrest mit 1 bis 18 Kohlenstoffatomen bedeutet,
- R¹: einen Alkylrest mit 1 bis 8 Kohlenstoffatomen bedeutet
- a: 1 oder 2 ist und
- b: 0 oder 1 ist,
mit der Maßgabe, dass die Summe a+b 1 oder 2 ist, gegebenenfalls in Gegenwart von Katalysatoren (3) kondensiert werden, wobei tertiäre Aminogruppen aufweisende Organopolysiloxane (4) erhalten werden, und
in einem zweiten Schritt,
die Stickstoffatome aus den im ersten Schritt erhaltenen Organopolysiloxanen (4) mit Alkylierungsmitteln (5) der Formel

R⁶-X (VII),

wobei
- R⁶: einen einwertigen Kohlenwasserstoffrest mit 1 bis 12 Kohlenstoffatomen, der eine oder mehrere Ethersauerstoffatome enthalten kann, bedeutet,
- X: ein Rest, der bei der Alkylierung der Stickstoffatome in den Organopolysiloxanen (4) ein Gegenion X⁻ zu der positiven Ladung am quartären Stickstoffatoms bildet, mit der Maßgabe, dass X kein Halogenatom und damit das Gegenion X⁻ kein Halogenid ist,
teilweise oder vollständig quaterniert werden,
mit der Maßgabe, dass im zweiten Schritt keine Basen zugegeben werden und
dass bei dem Verfahren Wasser in Mengen von weniger als 10 Gew.-%, vorzugsweise weniger als 4 Gew.-%, bevorzugt weniger als 1 Gew.-%, jeweils bezogen auf das Gesamtgewicht der Komponenten (1), (2), ggf. (3) und (5), mitverwendet wird.

Besonders bevorzugt wird das erfindungsgemäße Verfahren ohne Mitverwendung von Wasser durchgeführt.

Quartäre Ammoniumgruppen (quaternary ammonium groups) sind Derivate der Ammoniumgruppe, bei der alle vier Wasserstoffatome durch vier N-C-gebundene (ggf. substituierte) Kohlenwasserstoffgruppen, wie Alkylgruppen, ersetzt sind.

Vorzugsweise enthalten die eingesetzten Organopolysiloxane (1) neben den Siloxaneinheiten der Formel (I) Siloxaneinheiten der Formel 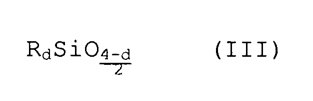 wobei R die oben dafür angegebene Bedeutung hat und d 0, 1, 2 oder 3, vorzugsweise 2, ist.

Die eingesetzten Organopolysiloxane (1) sind bevorzugt linear und können damit ein oder zwei Endgruppen der Formel (I) enthalten. Die Organopolysiloxane (1) können aber auch verzweigt sein und dann mehr als zwei der Endgruppen der Formel (I) enthalten. Die Organopolysiloxane (1) können aber auch Copolymere sein mit anderen Struktureinheiten als Siloxaneinheiten.

Bevorzugt werden als Organopolysiloxane (1) solche der allgemeinen Formel

HOR₂SiO(SiR₂O)ₙSiR₂OH (IV),

wobei R die oben dafür angegebene Bedeutung hat und n 0 oder eine ganze Zahl von 1 bis 1 000 ist,
eingesetzt.

Vorzugsweise ist der Rest A ein einwertiger Kohlenwasserstoffrest mit 3 bis 50 Kohlenstoffatomen, der mindestens eine tertiäre Aminogruppe enthält.

Bevorzugt ist der Rest A ein Rest der allgemeinen Formel

R³(-NR⁴-R³)₂-NR²_{z} (V),

wobei
- R²: gleich oder verschieden sein kann und einen einwertigen Kohlenwasserstoffrest mit 1 bis 18 Kohlenstoffatomen, der ein oder mehrere tertiäre Aminogruppen enthalten kann, bedeutet,
- R³: einen zweiwertigen SiC-gebundenen organischen Rest mit 1 bis 18 Kohlenstoffatomen, vorzugsweise einen zweiwertigen Kohlenwasserstoffrest mit 1 bis 18 Kohlenstoffatomen, bedeutet,
- R⁴: einen einwertigen Kohlenwasserstoffrest mit 1 bis 18 Kohlenstoffatomen bedeutet,
- z: 0 oder eine ganze Zahl von 1 bis 10, vorzugsweise 0, 1 oder 2 ist,

Die eingesetzten Organopolysiloxane (1) weisen vorzugsweise eine Viskosität von 2 bis 100 000 mPa.s bei 25°C, bevorzugt 10 bis 20 000 mPa.s bei 25°C, auf.

Beispiele für Kohlenwasserstoffreste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octyl-rest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α-und der β-Phenylethylrest.

Beispiele für Alkylreste R¹ sind der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octyl-rest und iso-Octylreste, wie der 2,2,4-Trimethylpentylrest.

Bevorzugt ist R¹ eine Methyl- oder Ethylrest.

Beispiele für Kohlenwasserstoffreste R gelten in vollem Umfang für Kohlenwasserstoffreste R². Bevorzugt ist R² ein Methyl- oder Ethylrest.

Beispiel für Kohlenwasserstoffreste R³ sind Alkylenreste, wie Reste der Formel -CH₂-, -CH₂CH₂-, -CH₂CH₂CH₂-, -CH₂CH₂CH₂CH₂-, -CH(CH₃)-, -C(CH₃)₂, -CH₂CH₂CH(CH₃)-, -CH₂CH₂C(CH₃)₂CH₂-.

Beispiele für Kohlenwasserstoffreste R gelten in vollem Umfang auch für Kohlenwasserstoffreste R⁴. Bevorzugt ist R⁴ ein Methylrest.

Beispiele für Reste A sind solche der Formel

-CH₂CH₂CH₂-N(CH₃)₂

-CH₂CH₂CH₂-N(CH₂CH₃)₂

-CH₂CH₂CH₂-N(CH₂CH₃)CH₃

-CH₂CH₂CH₂-N(CH₃)-CH₂CH₂-N(CH₃)₂

-CH₂CH₂CH₂-N(CH₃)-CH₂CH₂CH₂-N(CH₃)₂

-CH₂CH₂CH₂-N[CH₂CH₂-N(CH₃)₂]₂

-CH₂CH₂CH₂-N[CH₂CH₂CH₂-N(CH₃)₂]₂

Bevorzugt werden Aminosilane (2) der Formel ARSi(OR¹)₂ und ASi(OR¹)₃ eingesetzt, wobei ASi(OR¹)₃ besonders bevorzugt ist und A, R und R¹ die oben dafür angegebene Bedeutung haben.

In der ersten Stufe des erfindungsgemäßen Verfahrens werden Aminosilane (2) vorzugsweise in Mengen von 0,2 bis 3 Mol, bevorzugt 1 bis 3 Mol Alkoxygruppe -OR¹ in (2) je Mol Hydroxygruppe -OH im Organopolysiloxan (1) eingesetzt.

Im ersten Schritt des Verfahrens können Katalysatoren (3) mitverwendet werden, die die Kondensation beschleunigen. Vorzugsweise werden basische Verbindungen eingesetzt. Bei Einsatz von organischen Aminen sind solche mit einem pKₐ-Wert von mindestens 9 bevorzugt, jedoch selbst dann wird gegenüber der Kondensation ohne Katalysatorzusatz nur eine geringe Geschwindigkeitserhöhung der Reaktion erreicht.

Vorzugsweise werden als Katalysatoren (3) Alkali- oder Erdalkalibasen verwendet, von denen ihre Hydroxide, Alkoholate und Siloxanolate bevorzugt sind. Besonders bevorzugt sind Lithium- und Natriumbasen.

Bevorzugte Beispiele für Katalysatoren (3) sind Lithiumhydroxid, Lithiumoxid, Lithiumsiloxanolat und die Alkoholate des Lithiums, wie Lithiummethoxid, Lithiumethoxid, Lithiumpropoxid und Lithiumbutoxid. Diese können verdünnt in organischen Lösungsmitteln oder unverdünnt eingesetzt werden.

Beim ersten Schritt des erfindungsgemäßen Verfahrens wird der Katalysator (3) vorzugsweise in Mengen von 10 bis 10 000 Gew.-ppm, bevorzugt 20 bis 2 000 Gew.-ppm, bezogen auf das Gesamtgewicht der Organopolysiloxane (1) und Aminosilane (2), eingesetzt.

Die Katalyse des Kondensationsschrittes ist so zu verstehen, dass diese Reaktion bei sonst konstanten physikalischen Randbedingungen beschleunigt wird. Temperaturerhöhung ist ein weiterer beschleunigender Faktor. Üblicherweise erhält man besonders bei hohen Temperaturen, langer Zeitdauer und Verwendung stark basischer Katalysatoren auch erheblichen Umbau des Siloxangerüstes (Equilibrierung), mit dem Nebeneffekt, dass cyclische Siloxane gebildet werden. Da die niedrigen Homologen der cyclischen Siloxane flüchtige Verbindungen sind und daher aus dem Produkt entfernt werden müssen, ist ein derartiger Reaktionsverlauf nicht erwünscht. Bevorzugt werden daher Katalysatorstärke und -menge, sowie Reaktionstemperatur und Reaktionszeitdauer so bemessen, dass zwar vollständige Kondensation abläuft, aber nur geringe Bildung von cyclischen Siloxanen erfolgt.

Prinzipiell sind auch als Kondensationskatalysatoren bekannte Metallverbindungen wie Organo-titanate, -zirkonate und Zinn-Wismut- oder Bleisalze im erfindungsgemäßen System funktionsfähig. Ihre Verwendung ist aber aus ökologischen Gründen nicht bevorzugt.

Am Ende des Kondensationsschrittes können die Katalysatoren (3) neutralisiert werden und so der Umbau des Organopolysiloxans gestoppt werden.

Die erste Stufe des erfindungsgemäßen Verfahrens, die Kondensation, wird vorzugsweise bei einer Temperatur von 20 bis 150°C durchgeführt, wobei der Bereich von 50 bis 100°C in Abhängigkeit von der Katalysatorart und -menge, sowie der Reaktionszeit besonders bevorzugt ist.

Die Kondensation wird vorzugsweise beim Druck der umgebenden Atmosphäre, also etwa bei 1020 hPa, durchgeführt, es kann aber auch bei höheren oder niedrigeren Drücken durchgeführt werden.

Sofern gewünscht können die bei der Kondensation infolge einer Stöchiometrie von Si-OR¹/SiOH > 1 nicht abreagierten Alkoxyfunktionen -OR¹ der eingesetzten Aminosilane (2) gegen größere und damit weniger reaktive Reste durch Umesterung ausgetauscht werden. Während oder nach der Kondensation können die Alkoxygruppen -OR¹ durch Zusatz geeigneter Alkohole (6) teilweise oder vollständig ausgetauscht werden und die freigesetzten (flüchtigen) Alkohole R¹OH können destillativ entfernt werden. Dieses Verfahren kann der Stabilisierung der erhaltenen quartäre Ammoniumgruppen aufweisenden Organopolysiloxane dienen.

Als Alkohole (6) werden vorzugsweise solche der Formel

R⁵OH (VI),

eingesetzt, wobei
- R⁵: einen SiC-gebundenen Kohlenwasserstoffrest mit 4 bis 30 Kohlenstoffatomen, der ein oder mehrere Ethersauerstoffatome enthalten kann, bedeutet.

Beispiele für Reste R⁵ sind Reste der Formel C₄H₉-, C₆H₁₃-, C₈H₁₇-, C₁₀H₂₁-, C₁₂H₂₅-, C₄H₉(OCH₂CH₂)₂-CH₃(OC₃H₆)₂-, C₆H₁₃OC₂H₄- und C₆H₁₃(OC₂H4)₂-.

Beispiele für Alkohole (6) sind Butanol, Hexanol, Octanol, Decanol, Dodecanol, Diethylenglycolmonobutylether, Dipropylenglycolmonomethylether, Hexylglycol, Hexyldiglycol und Guerbetalkohole.

Alkohole (6) werden vorzugsweise in Mengen von 1 bis 5 Mol, bevorzugt 1,5 bis 3 Mol, je Mol Alkoxygruppen -OR¹ im Aminosilan (2) eingesetzt.

Nach dem ersten Schritt werden durch die einkondensierten Aminosilane (2) Organopolysiloxane (4) mit tertiären Aminogruppen erhalten.

Bevorzugt ist R⁶ ein linearer, verzweigter oder cyclischer Alkylrest mit 1 bis 6 Kohlenstoffatomen.

Beispiele für Reste R⁶ sind der Methyl-, Ethyl-, Propyl-, Isopropyl-, Butyl-, Isobutyl und der Cyclohexylrest.

Beispiele für Alkylierungsmittel (5) sind Dialkylsulfate und Sulfonsäureester wie Dimethylsulfat, Diethylsulfat, p-Toluolsulfonsäuremethylester, p-Toluolsulfonsäureethylester, p-Toluolsulfonsäurepropylester und p-Toluolsulfonsäure-sec.-butylester.

Im zweiten Schritt des erfindungsgemäßen Verfahrens wird Alkylierungsmittel (5) vorzugsweise in Mengen von 0,3 bis 1,2 Mol, bevorzugt 0,6 bis 1,1 Mol, je Mol alkylierbares Stickstoffatom im Organopolysiloxan (4) eingesetzt.

Die Quaternierung im zweiten Schritt des erfindungsgemäßen Verfahrens erfolgt vorzugsweise bei 50 bis 150°C, bevorzugt bei 60 bis 110°C.

Die Quaternierung wird vorzugsweise beim Druck der umgebenden Atmosphäre, also etwa bei 1020 hPa, durchgeführt, es kann aber auch bei höheren oder niedrigeren Drücken durchgeführt werden.

Im zweiten Schritt des Verfahrens ist eine Neutralisierung der bei der Alkylierung entstehenden Säuren, wie Sulfonsäure, nicht notwendig. Die Quaternierung erfolgt vorzugsweise ohne Zugabe von Basen, wie Natriumhydrogencarbonat, und ohne Zugabe von Wasser. Dies hat den Vorteil, dass quartäre Ammoniumgruppen aufweisende Organopolysiloxane mit nur einer geringen Salzbelastung erhalten werden und die quartäre Ammoniumgruppen aufweisenden Organopolysiloxane in Substanz und nicht verdünnt in Wasser erhalten werden, was zu einer höheren Wirkstoffkonzentration der quartären Ammoniumgruppen führt.

Erhalten werden nach dem erfindungsgemäßen Verfahren quartäre Ammoniumgruppen aufweisende Organopolysiloxane, ausgewählt aus der Gruppe von
(i) Organopolysiloxanen enthaltend Einheiten der Formel 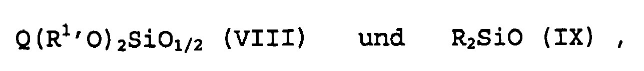
(ii) Organopolysiloxanen enthaltend Einheiten der Formel 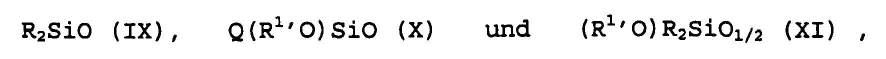
(iii) Organopolysiloxanen enthaltend Einheiten der Formel 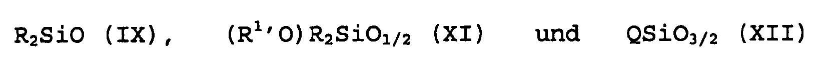
und deren Mischungen, wobei
- Q: einen einwertigen SiC-gebundenen organischen Rest, der mindestens eine quartäre Ammoniumgruppe enthält, bedeutet, und wobei jeweils ein Gegenion X⁻ zu der positiven Ladung am quartären Stickstoffatom enthalten ist, mit der Maßgabe, dass das Gegenion kein Halogenid ist,
- R¹' gleich R¹, R⁵: oder ein Wasserstoffatom ist, wobei
- R, R¹ und R⁵: die oben dafür angegebene Bedeutung haben.

Vorzugsweise ist Q ein einwertiger Kohlenwasserstoffrest mit 3 bis 50 Kohlenstoffatomen, der mindestens eine quartäre Ammoniumgruppe enthält.

Bevorzugt ist Q ein Rest der Formel 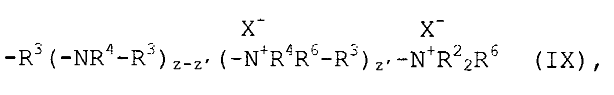
wobei R², R³, R⁴, R⁶ und z die oben dafür angegebene Bedeutung haben,
z' 0 oder eine ganze Zahl von 1 bis 10, vorzugsweise 0, 1 oder 2 ist, mit der Maßgabe, dass gilt 0<z-z'<10,
wobei jeweils ein Gegenion X⁻ zur positiven Ladung am quartären Stickstoffatom vorhanden ist, mit der Maßgabe, dass das Gegenion kein Halogenid ist.

Beispiele für SiC-gebundene organische Reste, die mindestens eine quartäre Ammoniumgruppe im Rest Q aufweisen, sind

-CH₂CH₂CH₂-N⁺(CH₃)₃

-CH₂CH₂CH₂-N⁺(CH₃)₂CH₂CH₃

-CH₂CH₂CH₂-N⁺(CH₂CH₃)₃

-CH₂CH₂CH₂-N⁺(CH₂CH₃)₂CH₃

-CH₂CH₂CH₂-N⁺(CH₃)₂CH₂CH₂CH₂CH₃

-CH₂CH₂CH₂CH₂-N⁺(CH₃)₃

-CH₂CH₂CH₂CH₂-N⁺(CH₂CH₃)₂CH₃

-CH₂CH₂CH₂-N⁺(CH₃)₂-CH₂CH₂-N⁺(CH₃)₃

-CH₂CH₂CH₂-N⁺(CH₃)₂-CH₂CH₂CH₂-N⁺(CH₃)₃

-CH₂CH₂CH₂-N(CH₃)-CH₂CH₂CH₂-N⁺(CH₃)₃

-CH₂CH₂CH₂-N⁺(CH₃)₂-CH₂CH₂CH₂-N(CH₃)₂

-CH₂CH₂CH₂-N⁺(CH₃)[CH₂CH₂-N(CH₃)₂]₂

-CH₂CH₂CH₂-N⁺(CH₃)[CH₂CH₂-N(CH₃)₂][CH₂CH₂-N⁺(CH₃)₃]

-CH₂CH₂CH₂-N⁺(CH₃)[CH₂CH₂-N⁺(CH₃)₃]₂

-CH₂CH₂CH₂-N⁺(CH₃)[CH₂CH₂CH₂-N⁺(CH₃)₃]₂

Bevorzugt sind die Gegenionen X⁻ Sulfonationen, wie Tosylationen, und Alkylsulfationen.

Beispiele für Gegenionen X⁻ zur positiven Ladung am quartären Stickstoffatom im Rest Q sind

CH₃SO₄⁻

CH₃CH₂SO₄⁻

C₆H₅SO₃⁻

p-CH₃(C₆H₄)SO₃⁻

CH₃SO₃⁻

C₄H₉SO₃⁻

C₈H₁₇SO₃⁻

Die nach dem erfindungsgemäßen Verfahren erhaltenen quartäre Ammoniumgruppen aufweisenden Organopolysiloxane weisen vorzugsweise eine Viskosität von 50 bis 500 000 mPa·s bei 25°C, bevorzugt 200 bis 100 000 mPa·s und besonders bevorzugt 500 bis 50 000 mPa.s bei 25°C auf.

Die erhaltenen quartäre Ammoniumgruppen aufweisenden Organopolysiloxane enthalten Amingruppenkonzentrationen im Bereich von vorzugsweise 0,01 bis 5,0 mEqu./g, bevorzugt 0,04 bis 2,0 mEu./g (mEqu./g = mÄquivalent pro g Substanz = Äquivalent pro kg Substanz).

Grundsätzlich kann in den erfindungsgemäßen quartäre Ammoniumgruppen aufweisenden Organopolsiloxanen das molare Verhältnis SiOR¹/SiOH bzw. SiOR⁵/SiOH in weiten Grenzen variieren; bevorzugt sind aber die Bereiche von 0,1 bis 0,7 und von 1,2 bis 3,0 , besonders bevorzugt die Bereiche von 0,3 bis 0,7 und von 1,5 bis 3,0. Im ersten Fall werden hydroxyfunktionelle, im letzten Fall alkoxyfunktionelle Siloxanpolymere erhalten.

Bei dem erfindungsgemäßen Verfahren benötigt überraschenderweise das stark polare Alkylierungsmittel (5) keinen Wasserzusatz um abreagieren zu können. Ein Vorteil des erfindungsgemäßen Verfahrens ist daher die hohe Raum-/Zeitausbeute. Insbesondere verglichen mit den Verfahren in Emulsion, wie in der eingangs erwähnten DE 196 52 524 A1 beschrieben, lassen sich 10- bis 20-fache Raum-/Zeitausbeuten erreichen, bezogen auf die quatfunktionellen Organopolysiloxane, welche die eigentlichen Wirkstoffe darstellen. Dieser große wirtschaftliche Vorteil ergibt sich aus der kompakteren Fahrweise durch den Verzicht auf eine wässrige Verdünnung, was durch die unerwartet gute Alkylierung auch ohne Wasser möglich ist und der in der Folge anwendbaren höheren Temperierung, was den Reaktionsablauf beschleunigt. Das Produkt beider Einzelvorteile ergibt den Gesamtvorteil.

### Beispiel 1:

192 g eines bei 100°C im Vakuum ausgeheizten Organopolysiloxans der Formel HO(Me₂SiO)₁₅₃H werden mit 8 g Diethylaminopropyltrimethoxysilan und 100 mg einer 10%-igen methanolischen Lösung von Lithiummethoxid homogen vermischt. Das klare Reaktionsgemisch wird eine Stunde auf 80°C unter schwachem Vakuum zur Entfernung des gebildeten Methanols erwärmt und es werden 10,5 g Diethylenglycolmonobutylether und nach 30 Minuten 6,4 g p-Toluolsulfonsäuremethylester zugefügt. Die Quaternierung ist nach 2 Stunden beendet und die anfängliche Trübung wieder aufgelöst. Es wird eine klare ca. 95%-ige Lösung eines quatfunktionellen Siloxans mit einer Viskosität von 5100 mPa.s (25°C) und einer Konzentration an positiv geladenem Stickstoff von 0,15 mEqu./g erhalten. Der molare Anteil von Dimethylsiloxyeinheiten in Form von flüchtigem Octamethylcyclotetrasiloxan beträgt laut ²⁹Si-NMR weniger als 0,1%. Es ist kein freies Silan mehr nachweisbar.

### Beispiel 2:

196 g eines bei 100°C im Vakuum ausgeheizten Organopolysiloxans der Formel HO(Me₂SiO)₂₃₈H werden mit 4 g Diethylaminopropyltrimethoxysilan und 50 mg einer 10%-igen methanolischen Lösung von Lithiummethoxid homogen vermischt und bei leichtem Vakuum zwei Stunden auf 80 °C gehalten. Das klare Kondensat wird mit 3,2 g p-Toluolsulfonsäuremethylester versetzt und es wird eine weitere Stunde bei 100°C ausreagieren gelassen. Es wird ein farbloses klares Polysiloxan mit einer Konzentration von 0,07 m Equ. quatärem Stickstoff pro g und einer Viskosität von 97 000 mPa.s (25 °C) erhalten. Im ²⁹Si-NMR ist kein freies Silan nachweisbar und es enthält weniger als 0,1 Mol% Octamethylcyclotetrasiloxan. Das Produkt besteht zu 100% aus einem erfindungsgemässen Polysiloxan.

### Beispiel 3:

196 g des in Beispiel 2 eingesetzten Polydimethylsiloxans werden mit der gleichen Menge des identischen Aminosilans wie dort zum tertiären Aminosiloxan kondensiert. Zu dem klaren Produkt werden 10,5 g Diethylenglycolmonobutylether zugegeben und es wird bei gleicher Temperatur weitere 30 Minuten unter Vakuum gerührt. Dann wird 1,7 g p-Toluolsulfonsäureethylester zudosiert und eine weitere Stunde auf 100°C erwärmt. Es wird eine farblose klare Lösung eines teilquaternierten Siloxans mit einem Gehalt an positiv geladenen Stickstoff von 0,04 mEqu./g und einer Viskosität von 10 100 mPa.s (25°C) erhalten. Es ist kein freies Silan mehr nachweisbar. Der molare Anteil von Dimethylsiloxyeinheiten in Form von flüchtigem Octamethylcyclotetrasiloxan beträgt ca. 0,1%.

## Patentansprüche

1. Verfahren zur Herstellung von quartäre Ammoniumgruppen aufweisenden Organopolysiloxanen indem in einem ersten Schritt
Organopolysiloxane (1), die mindestens eine endständige Einheit der allgemeinen Formel
HO-SiR₂O_{1/2} (I)
aufweisen,
mit Aminosilanen (2) der allgemeinen Formel
AₐR_{b}Si(OR¹)_{4-(a+b)} (II),
wobei
A einen einwertigen SiC-gebundenen organischen Rest, der mindestens eine tertiäre Aminogruppe enthält, bedeutet, mit der Maßgabe, dass der Rest A keine primären und sekundären Aminogruppen enthält,
R gleich oder verschieden sein kann und einen einwertigen Kohlenwasserstoffrest mit 1 bis 18 Kohlenstoffatomen bedeutet,
R¹ einen Alkylrest mit 1 bis 8 Kohlenstoffatomen bedeutet
a 1 oder 2 ist und
b 0 oder 1 ist,
mit der Maßgabe, dass die Summe a+b 1 oder 2 ist, gegebenenfalls in Gegenwart von Katalysatoren (3) kondensiert werden, wobei tertiäre Aminogruppen aufweisende Organopolysiloxane (4) erhalten werden, und
in einem zweiten Schritt,
die Stickstoffatome aus den im ersten Schritt erhaltenen Organopolysiloxanen (4) mit Alkylierungsmitteln (5) der Formel
R⁶-X (VII),
wobei
R⁶ einen einwertigen Kohlenwasserstoffrest mit 1 bis 12 Kohlenstoffatomen, der eine oder mehrere Ethersauerstoffatome enthalten kann, bedeutet,
X ein Rest, der bei der Alkylierung der Stickstoffatome in den Organopolysiloxanen (4) ein Gegenion X⁻ zu der positiven Ladung am quartären Stickstoffatoms bildet, mit der Maßgabe, dass X kein Halogenatom und damit das Gegenion X⁻ kein Halogenid ist,
teilweise oder vollständig quaterniert werden,
mit der Maßgabe, dass im zweiten Schritt keine Basen zugegeben werden und
dass bei dem Verfahren Wasser in Mengen von weniger als 10 Gew.-%, bezogen auf das Gesamtgewicht der Komponenten (1), (2), ggf. (3) und (5), mitverwendet wird.

2. Verfahren nach Anspruch 1, **dadurch gekennzeichnet, dass** als Organopolysiloxane (1) solche der allgemeinen Formel
HOR₂SiO(SiR₂O)ₙSiR₂OH (IV),
wobei R die im Anspruch 1 dafür angegebene Bedeutung hat und n 0 oder eine ganze Zahl von 1 bis 2 000 ist, eingesetzt werden.

3. Verfahren nach Anspruch 1 oder 2, **dadurch gekennzeichnet, dass** als Aminosilane (2) solche der allgemeinen Formel
ARSi (OR¹)₂ und/oder ASi(OR¹)₃,
wobei A, R und R¹ die in Anspruch 1 dafür angegebene Bedeutung haben,
eingesetzt werden.

4. Verfahren nach Anspruch 1, 2 oder 3, **dadurch gekennzeichnet, dass** A ein Rest der Formel
-R³(-NR⁴-R³)_{z}-NR²₂ (V),
ist, wobei
R² gleich oder verschieden sein kann und einen einwertigen Kohlenwasserstoffrest mit 1 bis 18 Kohlenstoffatomen, der ein oder mehrere tertiäre Aminogruppen enthalten kann, bedeutet,
R³ einen zweiwertigen SiC-gebundenen organischen Rest mit 1 bis 18 Kohlenstoffatomen, vorzugsweise einen zweiwertigen Kohlenwasserstoffrest mit 1 bis 18 Kohlenstoffatomen, bedeutet,
R⁴ einen einwertigen Kohlenwasserstoffrest mit 1 bis 18 Kohlenstoffatomen bedeutet und
z 0 oder eine ganze Zahl von 1 bis 10, vorzugsweise 0, 1 oder 2 ist.

5. Verfahren nach einem der Ansprüche 1 bis 4, **dadurch gekennzeichnet, dass** im ersten Schritt des Verfahrens basische Katalysatoren (3) mitverwendet werden.

6. Verfahren nach einem der Ansprüche 1 bis 5, **dadurch gekennzeichnet, dass** im ersten Schritt des Verfahrens während oder nach der Kondensation Alkohole (6) zur Umesterung der Alkoxygruppen -OR¹ zugegeben werden.

7. Verfahren nach einem der Ansprüche 1 bis 6, **dadurch gekennzeichnet, dass** im zweiten Schritt des Verfahrens als Alkylierungsmittel (5) Dialkylsulfate und Sulfonsäureester eingesetzt werden.

## Claims

1. Process for preparing organopolysiloxanes having quaternary ammonium groups by:
in a first step,
condensing organopolysiloxanes (1) which have at least one terminal unit of the general formula
HO-SiR₂O_{1/2} (I)
with aminosilanes (2) of the general formula
AₐR_{b}Si(OR¹)_{4-(a+b)} (II),
where
A is a monovalent SiC-bonded organic radical which contains at least one tertiary amino group, with the proviso that the A radical contains no primary or secondary amino groups,
R may be the same or different and is a monovalent hydrocarbon radical having 1 to 18 carbon atoms,
R¹ is an alkyl radical having 1 to 8 carbon atoms,
a is 1 or 2 and
b is 0 or 1,
with the proviso that the sum of a+b is 1 or 2,
optionally in the presence of catalysts (3), to obtain organopolysiloxanes (4) having tertiary amino groups, and,
in a second step, partly or fully quaternizing the nitrogen atoms from the organopolysiloxanes (4) obtained in the first step with alkylating agents (5) of the formula
R⁶-X (VII)
where
R⁶ is a monovalent hydrocarbon radical which has 1 to 12 carbon atoms and may contain one or more ether oxygen atoms,
X is a radical which, in the alkylation of the nitrogen atoms in the organopolysiloxanes (4), constitutes a counterion X⁻ to the positive charge on the quaternary nitrogen atom, with the proviso that X is not a halogen atom and hence the counterion X⁻ is not a halide, with the proviso that no bases are added in the second step and that, in the process, water is used in amounts of less than 10% by weight, based on the total weight of the components (1), (2), if appropriate (3) and (5).

2. Process according to Claim 1, **characterized in that** the organopolysiloxanes (1) used are those of the general formula
HOR₂SiO (SiR₂O)ₙSiR₂OH (IV),
where R is as defined in Claim 1 and n is 0 or an integer from 1 to 2000.

3. Process according to Claim 1 or 2, **characterized in that** the aminosilanes (2) used are those of the general formula
ARSi(OR¹)₂ and/ or ASi(OR¹)₃,
where A, R and R¹ are each as defined in Claim 1.

4. Process according to Claim 1, 2 or 3, **characterized in that** A is a radical of the formula
-R³(-NR⁴-R³)_{z}-NR²₂ (V),
where
R² may be the same or different and is a monovalent hydrocarbon radical which has 1 to 18 carbon atoms and may contain one or more tertiary amino groups,
R³ is a divalent SiC-bonded organic radical having 1 to 18 carbon atoms, preferably a divalent hydrocarbon radical having 1 to 18 carbon atoms,
R⁴ is a monovalent hydrocarbon radical having 1 to 18 carbon atoms and
z is 0 or an integer from 1 to 10, preferably 0, 1 or 2.

5. Process according to any one of Claims 1 to 4, **characterized in that** basic catalysts (3) are used in the first step of the process.

6. Process according to any one of Claims 1 to 5, **characterized in that** alcohols (6) for transesterification of the alkoxy groups -OR¹ are added during or after the condensation in the first step of the process.

7. Process according to any one of Claims 1 to 6, **characterized in that** the alkylating agents (5) used in the second step of the process are dialkyl sulfates and sulfonic esters.

## Revendications

1. Procédé pour la préparation d'organopolysiloxanes comportant des groupes ammonium quaternaires, dans lequel,
dans une première étape,
on condense des organopolysiloxanes (1), qui comportent au moins un motif terminal de formule générale
HO-SiR₂O_{1/2} (I),
avec des aminosilanes (2) de formule générale
AₐR_{b}Si(OR¹)_{4-(a+b)} (II),
où
A représente un radical organique monovalent lié par une liaison SiC, qui contient au moins un groupe amino tertiaire, étant entendu que le radical A ne contient pas de groupes amino primaires et secondaires,
R peut être le même ou différent et représente un radical hydrocarboné monovalent ayant de 1 à 18 atomes de carbone,
R¹ représente un radical alkyle ayant de 1 à 8 atomes de carbone
a est 1 ou 2 et
b est 0 ou 1,
étant entendu que la somme a+b est égale à 1 ou 2,
éventuellement en présence de catalyseurs (3), de sorte qu'on obtient des organopolysiloxanes (4) comportant des groupes amino tertiaires, et
dans une deuxième étape,
on rend partiellement ou totalement quaternaires les atomes d'azote des organopolysiloxanes (4) obtenus dans la première étape à l'aide d'agents d'alkylation (5) de formule
R⁶-X (VII),
dans laquelle
R⁶ représente un radical hydrocarboné monovalent ayant de 1 à 12 atomes de carbone, qui peut contenir un ou plusieurs atomes d'oxygène en fonction éther,
X représente un radical qui forme un ion opposé X⁻, par rapport à la charge positive de l'atome d'azote quaternaire, lors de l'alkylation des atomes d'azote dans les organopolysiloxanes (4), étant entendu que X n'est pas un atome d'halogène et donc que l'ion opposé X⁻ n'est pas un halogénure,
étant entendu que dans la deuxième étape on n'ajoute pas de bases et
que dans le procédé on utilise en même temps de l'eau en quantités de moins de 10 % en poids, par rapport au poids total des composants (1), (2), éventuellement (3) et (5).

2. Procédé selon la revendication 1, **caractérisé en ce qu'**on utilise comme organopolysiloxanes (1) ceux de formule générale
HOR₂SiO(SiR₂O)ₙSiR₂ (IV),
dans laquelle R a la signification indiquée pour ce symbole dans la revendication 1 et n est 0 ou un nombre entier valant de 1 à 2 000.

3. Procédé selon la revendication 1 ou 2, **caractérisé en ce qu'**on utilise comme aminosilanes (2) ceux de formule générale
ARSi(OR¹)₂ et/ou ASi(OR¹)₃,
où A, R et R¹ ont la signification indiquée pour ces symboles dans la revendication 1.

4. Procédé selon la revendication 1, 2 ou 3, **caractérisé en ce que** A est un radical de formule
-R³(-NR⁴-R³)_{z}-NR²₂ (V),
dans laquelle
R² peut être le même ou différent et représente un radical hydrocarboné monovalent ayant de 1 à 18 atomes de carbone, qui peut contenir un ou plusieurs groupes amino tertiaires,
R³ représente un radical organique divalent ayant de 1 à 18 atomes de carbone, lié par une liaison SiC, de préférence un radical hydrocarboné divalent ayant de 1 à 18 atomes de carbone,
R⁴ représente un radical hydrocarboné monovalent ayant de 1 à 18 atomes de carbone et
z est 0 ou un nombre entier valant de 1 à 10, de préférence 0, 1 ou 2.

5. Procédé selon l'une quelconque des revendications 1 à 4, **caractérisé en ce que** dans la première étape du procédé on utilise des catalyseurs (3) basiques.

6. Procédé selon l'une quelconque des revendications 1 à 5, **caractérisé en ce que** dans la première étape du procédé, pendant ou après la condensation, on ajoute des alcools (6) pour la transestérification des groupes alcoxy -OR¹.

7. Procédé selon l'une quelconque des revendications 1 à 6, **caractérisé en ce que** dans la deuxième étape du procédé on utilise comme agents d'alkylation (5) des sulfates de dialkyle et des esters d'acide sulfonique.
